# EUROPEAN PATENT APPLICATION

(11) **EP 4 366 406 A1**
(43) Date of publication of application: **08.05.2024**
(21) Application number: 23155321.5
(22) Date of filing: 07.02.2023
(51) Int. Cl.: H04W 68/00, H04W 48/04, H04W 48/08

(54) **HANDLING OF 5GS FORBIDDEN TRACKING AREAS FOR ROAMING AND FOR REGIONAL PROVISION OF SERVICE**

(30) Priority: 02.11.2022 JP 2022176284
(71) Applicant: SHARP Kabushiki Kaisha, Sakai-City, Osaka 590-8522 (JP)
(72) Inventor: CHIBA, Shuichiro, Sakai City, Osaka, 590-8522 (JP); SUGAWARA, Yasuo, Sakai City, Osaka, 590-8522 (JP)
(74) Representative: Müller Hoffmann & Partner

(57) **Abstract**

Object

Standardization of communication related to connection of LTE to a 5G core network via a satellite has been promoted. On the other hand, behaviors of UE and the network related to updating of a forbidden tracking area identity (TAI) for connection of the UE to the 5G core network via a satellite are not clear.

Solution

In a UE configuration update procedure initiated by a network when the UE is connected to the network via a satellite, one or more forbidden TAIs in a 5G system (5GS) forbidden tracking area information element for roaming and/or regional provision of service are included and transmitted in a configuration update command message transmitted by a 5G core network to the UE to provide an appropriate procedure for updating a tracking area identity (TAI) list stored in the UE while the UE in a 5GMM connected mode maintains a registered state.

## Description

### Technical Field

The present invention relates to user equipment (UE).

### Background Art

In the 3rd Generation Partnership Project (3GPP), the system architecture of the 5G system (5GS) that is a fifth generation (5G) mobile communication system has been under study, and support for new procedures and new functions has been discussed (see NPL 1 to NPL 6). In Release 17 of the 5G standard, an architecture for 5G communication via an artificial satellite (also simply referred to as a "satellite"), a procedure for communication and control, and the like have been studied (see NPL 6).

### Citation List

### Non Patent Literature

NPL 1: 3GPP TS 23.501 V17.6.0 (2022-09); 3rd Generation Partnership Project; Technical Specification Group Services and System Aspects; System Architecture for the 5G System (5GS); Stage 2 (Release 17)
NPL 2: 3GPP TS 23.502 v17.6.0 (2022-09); 3rd Generation Partnership Project; Technical Specification Group Services and System Aspects; Procedures for the 5G System (5GS); Stage 2 (Release 17)
NPL 3: 3GPP TS 24.501 V17.8.0 (2022-09); 3rd Generation Partnership Project; Technical Specification Group Core Network and Terminals; Non-Access-Stratum (NAS) protocol for 5G System (5GS); Stage 3 (Release 17)
NPL 4: 3GPP TS 23.122 V17.8.0 (2022-09); 3rd Generation Partnership Project; Technical Specification Group Core Network and Terminals; Non-Access-Stratum (NAS) Functions Related to Mobile Station (MS) in Idle Mode (Release 17)
NPL 5: 3GPP TS 38.300 V17.2.0 (2022-09); 3rd Generation Partnership Project; Technical Specification Group Radio Access Network; NR; NR and NG-RAN Overall Description; Stage 2 (Release 17)
NPL 6: 3GPP TR 23.737 V17.2.0 (2021-03); 3rd Generation Partnership Project; Technical Specification Group Services and System Aspects; Study on Architecture Aspects for Using Satellite Access in 5G (Release 17)

### Summary of Invention

### Technical Problem

A 5G core network (5GCN) that is a new core network has been under study in order to provide a wide variety of services in the 5G system (5GS). Furthermore, an architecture for 5G communication via an artificial satellite (also simply referred to as a "satellite") has been studied.

At present, in the communication architecture in which a satellite is used as a radio technology (access technology) for connecting user equipment (UE) and a core network, expansion of conventional procedures, messages, and parameters is being studied in consideration of characteristics of satellites.

On the other hand, in communication via a satellite, the procedures, messages, and some of behaviors of UE when the 5GS or the network updates the forbidden TAI stored in the UE are unclear.

An aspect of the present invention has been made in view of the above circumstances, and an object thereof is to clarify the procedures and messages when the 5GS or a network updates a forbidden TAI list stored in UE, and behaviors of the UE when the messages are received from the network.

### Solution to Problem

A user equipment (UE) according to an aspect of the present invention is a LTE including a transmission and/or reception unit, a controller, and a storage unit, in which, in a UE configuration update procedure, the transmission and/or reception unit receives a configuration update command message including first identification information and/or second identification information, the first identification information is a forbidden TAI information element of a list of a 5G system (5GS) forbidden tracking area for roaming and includes one or more tracking area identities (TAIs), the second identification information is a forbidden TAI information element of a list of a 5GS forbidden tracking area for regional provision of service and includes one or more TAIs, and the controller stores, in a case that the storage unit does not store one or more TAIs included in the first and/or second identification information, the one or more TAIs included in the first and/or second identification information, and deletes, in a case that the storage unit stores one or more TAIs included in the first and/or second identification information, the one or more TAIs included in the first and/or second identification information.

### Advantageous Effects of Invention

According to an aspect of the present invention, a means for updating a forbidden tracking area stored in the UE is provided by clarifying the message received by the UE, included information, and the behavior of the LTE after the reception in a procedure for updating a forbidden tracking area stored in the UE connected to an 5G network via a satellite.

### Brief Description of Drawings

FIG. 1 is a diagram illustrating an overview of a mobile communication system (EPS/5GS).
FIG. 2 is a diagram illustrating a detailed configuration of the mobile communication system (EPS/5GS).
FIG. 3 is a diagram illustrating an apparatus configuration of LTE.
FIG. 4 is a diagram illustrating a configuration of an access network apparatus (gNB) in the 5GS.
FIG. 5 is a diagram illustrating a configuration of a core network apparatus (AMF/SMF/LTPF) in the 5GS.
FIG. 6 is a diagram illustrating a registration procedure.
FIG. 7 is a diagram illustrating a UE configuration modification procedure.

### Description of Embodiments

A preferred embodiment for carrying out an aspect of the present invention will be described below with reference to the drawings. Further, as an example, an embodiment of a mobile communication system to which an aspect of the present invention is applied will be described in the present embodiment.

### 1. Overview of System

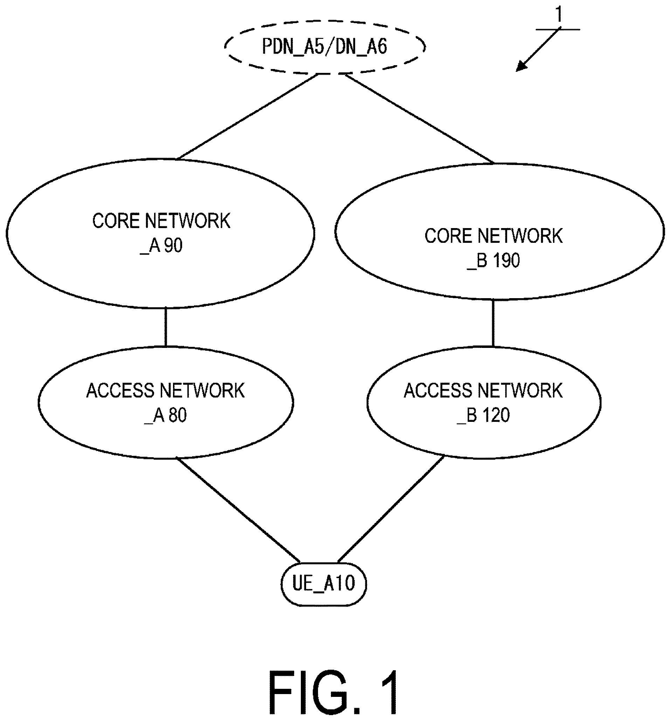

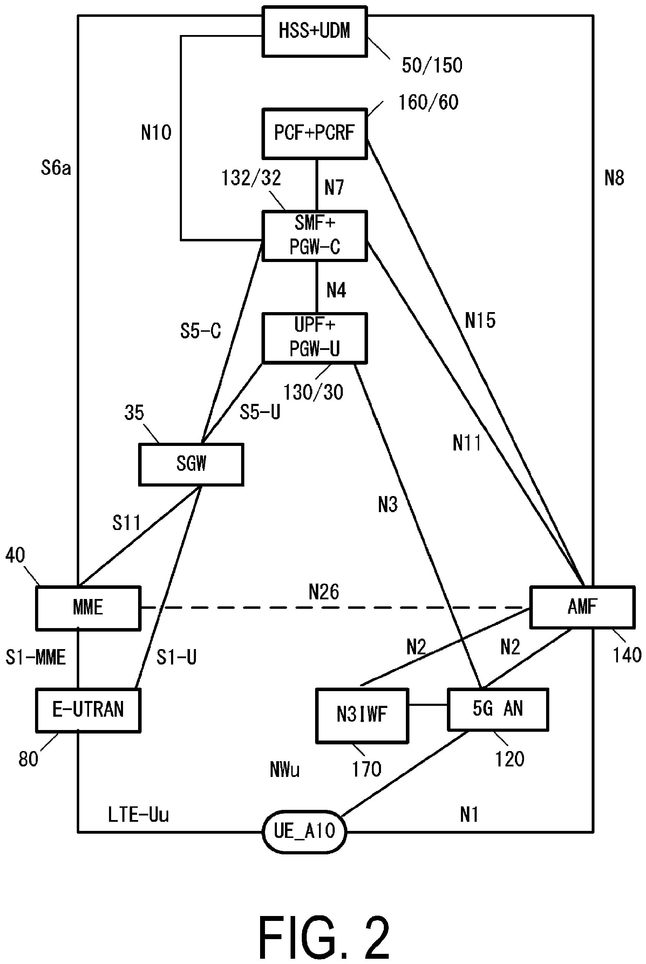

First, FIG. 1 is a diagram for describing an overview of a mobile communication system 1 used in each embodiment, and FIG. 2 is a diagram for describing a detailed configuration of the mobile communication system 1.

In FIG. 1, the mobile communication system 1 includes UE_A 10, an access network A 80, a core network _A 90, a packet data network (PDN)_A 5, an access network_B 120, a core network_B 190, and a data network (DN)_A 6.

In the following description, the reference symbols may be omitted, such as in UE, an access network_A, a core network_A, a PDN, an access network _B, a core network _B, a DN, and the like, in regard to these apparatuses and functions.

In addition, in FIG. 2, apparatuses and functions such as UE_A 10, an E-UTRAN 80, an MME 40, an SGW 35, a PGW-U 30, a PGW-C 32, a PCRF 60, an HSS 50, a 5G AN 120, an AMF 140, a UPF 130, an SMF 132, a PCF 160, a UDM 150, and an N3IWF 170, and interfaces for connecting these apparatuses and functions to each other are illustrated.

In the following description, the reference symbols may be omitted, such as in UE, an E-UTRAN, an MME, an SGW, a PGW-U, a PGW-C, a PCRF, an HSS, a 5G AN, an AMF, a UPF, an SMF, a PCF, a UDM, and an N3IWF, in regard to these apparatuses and functions.

Further, although an evolved packet system (EPS) that is a 4G system includes the access network A and the core network _A, the EPS may further include the LTE and/or a PDN. In addition, although the 5GS that is the 5G system includes the UE, the access network _B, and the core network _B, the 5GS may further include the DN.

The LTE is an apparatus that can be connected to a network service through 3GPP access (also referred to as a 3GPP access network or a 3GPP AN) and/or non-3GPP access (also referred to as a non-3GPP access network or a non-3GPP AN). The UE may be a terminal apparatus capable of performing radio communication, such as a mobile telephone or a smartphone, and may be a terminal apparatus that can be connected to both the EPS and the 5GS. The UE may include a universal integrated circuit card (UICC) or an embedded UICC (eUICC). Further, the UE may be referred to as user equipment or a terminal apparatus.

In addition, the access network_A corresponds to an evolved universal terrestrial radio access network (E-UTRAN) and/or a radio LAN access network. In the E-UTRAN, one or more evolved Node Bs (eNBs) 45 are deployed. Further, in the following description, the reference symbol for the eNB 45 may be omitted such as in an eNB. In addition, in a case that there are multiple eNBs, the eNBs are connected to each other via, for example, an X2 interface. In addition, in the radio LAN access network, one or more access points are deployed.

In addition, the access network_B corresponds to a 5G access network (5G AN). The 5G AN includes an NG radio access network (NG-RAN) and/or a non-3GPP access network. In the NG-RAN, one or more NR NodeBs (gNBs) 122 are deployed. Further, in the following description, the reference symbol for the gNB 122 may be omitted, such as in a gNB. The gNB is a node that provides a New Radio (NR) user plane and control plane to the UE, and is connected to a 5GCN via an NG interface (including an N2 interface or N3 interface). In other words, the gNB is a base station apparatus newly designed for the 5GS and has functions different from those of the base station apparatus (eNB) used in the EPS that is the 4G system. In addition, in a case that there are multiple gNBs, the gNBs are connected to each other via, for example, an Xn interface.

In addition, a non-3GPP access network may be an untrusted non-3GPP access network or a trusted non-3GPP access network. Here, the untrusted non-3GPP access network may be a non-3GPP access network that is an access network in which security management is not performed, for example, a public wireless LAN. On the other hand, the trusted non-3GPP access network may be an access network defined by the 3GPP, and may include a trusted non-3GPP access point (TNAP) and a trusted non-3GPP gateway function (TNGF).

In addition, in the following description, the E-UTRAN and the NG-RAN may be referred to as 3GPP access. In addition, the radio LAN access network and the non-3GPP AN may be referred to as non-3GPP access. In addition, the nodes deployed in the access network_B may also be collectively referred to as NG-RAN nodes.

In addition, in the following description, the access network_A, and/or the access network_B, and/or an apparatus included in the access network_A, and/or an apparatus included in the access network_B may be referred to as an access network or an access network apparatus.

In addition, the core network_A corresponds to an evolved packet core (EPC). In the EPC, for example, a mobility management entity (MME), a serving gateway (SGW), a packet data network gateway (PGW)-U, a PGW-C, a policy and charging rules function (PCRF), a home subscriber server (HSS), and the like are deployed.

In addition, the core network_B corresponds to a 5G core network (5GCN). In the 5GCN, for example, an access and mobility management function (AMF), a user plane function (UPF), a session management function (SMF), a policy control function (PCF), unified data management (UDM), and the like are deployed. Here, the 5GCN may be expressed as 5GC.

In addition, in the following description, the core network_A, and/or the core network_B, an apparatus included in the core network_A, and/or an apparatus included in the core network_B may be referred to as a core network, a core network apparatus, or an intra-core network apparatus.

A core network (the core network_A and/or the core network_B) may refer to an IP mobile communication network operated by a mobile communication operator (mobile network operator or MNO) connecting an access network (the access network_A and/or the access network_B) to the PDN and/or the DN, or may refer to a core network for a mobile communication operator that operates and manages the mobile communication system 1, or a core network for a virtual mobile communication operator and a virtual mobile communication service provider such as a mobile virtual network operator (MVNO) and a mobile virtual network enabler (MVNE).

In addition, although a case where the PDN and the DN are the same is described in FIG. 1, the PDN and the DN may be different. The PDN may be a data network (DN) that provides communication services to the UE. Further, the DN may be configured as a packet data service network or may be configured for each service. Furthermore, the PDN may include a connected communication terminal. Thus, the expression "being connected to the PDN" may mean "being connected to a communication terminal or a server apparatus deployed in the PDN". Furthermore, the expression "transmit and/or receive user data to and/or from the PDN" may mean "transmit and/or receive user data to and/or from a communication terminal or a server apparatus deployed in the PDN". Further, the PDN may be expressed as a DN, and the DN may be expressed as a PDN.

In addition, in the following, at least some of the access network_A, the core network_A, the PDN, the access network_B, the core network_B, and the DN, and/or one or more apparatuses included in these may be referred to as a network or a network apparatus. In other words, the expression that "the network and/or the network apparatus transmits and/or receives a message and/or performs a procedure" means that "at least some of the access network_A, the core network_A, the PDN, the access network_B, the core network_B, and the DN, and/or one or more apparatuses included in these transmit and/or receive a message and/or perform a procedure".

In addition, the UE can be connected to the access network. In addition, the UE can be connected to the core network via the access network. Furthermore, the UE can be connected to the PDN or the DN via the access network and the core network. In other words, the UE can transmit and/or receive (communicate) user data to and/or from (with) the PDN or the DN. When user data is transmitted and/or received, not only Internet Protocol (IP) communication but also non-IP communication may be used.

Here, IP communication refers to data communication using the IP, and data is transmitted and/or received using IP packets. The IP packets are composed of an IP header and a payload part. In the payload part, data transmitted and/or received by the apparatuses and functions included in the EPS and the apparatuses and functions included in the 5GS may be included. In addition, non-IP communication refers to data communication not using the IP, where data is transmitted and/or received in a form different from the structure of the IP packets. For example, non-IP communication may be data communication implemented through transmission and/or reception of application data to which an IP header is not added, or user data transmitted and/or received by the UE may be transmitted and/or received with another header such as a MAC header and an Ethernet (trade name) frame header added.

In addition, apparatuses which are not illustrated in FIG. 2 may be configured in the access network_A, the core network_A, the access network_B, the core network_B, the PDN_A, and the DN_A. For example, the core network_A and/or the core network B may include an authentication server function (AUSF) and an authentication, authorization, and accounting (AAA) server (AAA-S).

Here, an AUSF is a core network apparatus provided with an authentication function for 3GPP access and non-3GPP access. Specifically, the AUSF is a network function unit that receives an authentication request for 3GPP access and/or non-3GPP access from the UE and performs an authentication procedure.

In addition, the AAA server is an apparatus that is connected directly to the AUSF or indirectly to the AUSF via another network apparatus and has authentication, authorization, and billing functions. The AAA server may be a network apparatus within the core network. Further, the AAA server may not be included in the core network_A and/or the core network B and may be included in a public land mobile network (PLMN). In other words, the AAA server may be a core network apparatus or may be an apparatus outside the core network. For example, the AAA server may be a server apparatus within the PLMN managed by a third party.

Further, although each of the apparatuses and functions is illustrated one by one for simplicity in FIG. 2, multiple similar apparatuses and functions may be configured in the mobile communication system 1. Specifically, multiple apparatuses and functions such as the UE_A 10, the E-UTRAN 80, the MME 40, the SGW 35, the PGW-U 30, the PGW-C 32, the PCRF 60, the HSS 50, the 5G AN 120, the AMF 140, the UPF 130, the SMF 132, the PCF 160, and/or the UDM 150 may be configured in the mobile communication system 1.

A UPF_A 235 is connected to the DN, the SMF, other UPFs and the access network. The UPF_A 235 may play roles of an anchor to intra-RAT mobility or inter-RAT mobility, packet routing & forwarding, an uplink classifier (LTL CL) function to support routing of multiple traffic flows for one DN, a branching point function to support a multi-homed PDU session, QoS processing for a user plane, verification of uplink traffic, buffering of downlink packets, a function of triggering downlink data notification, and the like. In addition, the UPF_A 235 may be a relay apparatus that transfers the user data as a gateway between the DN and the core network_B 190. Further, the UPF_A 235 may serve as a gateway for IP communication and/or non-IP communication. Furthermore, the UPF_A 235 may have a function of transferring IP communication or a function of performing conversion between non-IP communication and IP communication. Furthermore, multiple gateways deployed may serve as gateways for connecting the core network_B 190 with a single DN. Further, the UPF_A 235 may have connectivity with another NF or may be connected to each apparatus via another NF.

Further, a UPF_C 239 (also referred to as a branching point or an uplink classifier), which is a UPF different from the UPF_A 235, may be present as an apparatus or an NF between the UPF_A 235 and the access network. In the case that the UPF_C 239 is present, a PDU session between the UE and the DN is established via the access network, the UPF_C 239, and the UPF_A 235.

In addition, the UPF 130 may be an apparatus similar to the UPF_A 235. Further, the reference symbols for the UPF 130 and the UPF_A 235 may be omitted, such as a UPF.

### 2. Configuration of Each Apparatus

Next, a configuration of each apparatus (the UE, and/or the access network apparatus, and/or the core network apparatus) used in each embodiment will be described with reference to the drawings. Further, each apparatus may be configured as physical hardware, may be configured as logical (virtual) hardware configured in general-purpose hardware, or may be configured as software. In addition, at least some (including all) of the functions of each apparatus may be configured as physical hardware, logical hardware, or software.

Further, each storage unit (a storage unit_A 340, a storage unit_A 440, a storage unit_B 540, a storage unit_A 640, and a storage unit_B 740) in each apparatus and function to be described later includes, for example, a semiconductor memory, a solid state drive (SSD), a hard disk drive (HDD), or the like. In addition, each storage unit can store not only information originally configured at the time of being shipped, but also various pieces of information transmitted and/or received to and/or from apparatuses and functions (for example, the LTE, and/or the access network apparatus, and/or the core network apparatus, and/or the PDN, and/or the DN) other than the apparatus and functions of each storage unit. In addition, each storage unit can store identification information, control information, flags, parameters, and the like included in a control message transmitted and/or received in various communication procedures to be described later. In addition, each storage unit may store these pieces of information for each piece of UE. In addition, in a case that the 5GS and the EPS interwork, each storage unit can store a control message and user data transmitted and/or received to and/or from the apparatuses and functions included in the 5GS and/or the EPS. In this case, the storage unit can store not only data transmitted and/or received via an N26 interface but also data transmitted and/or received without using the N26 interface.

### 2.1. Apparatus Configuration of LTE

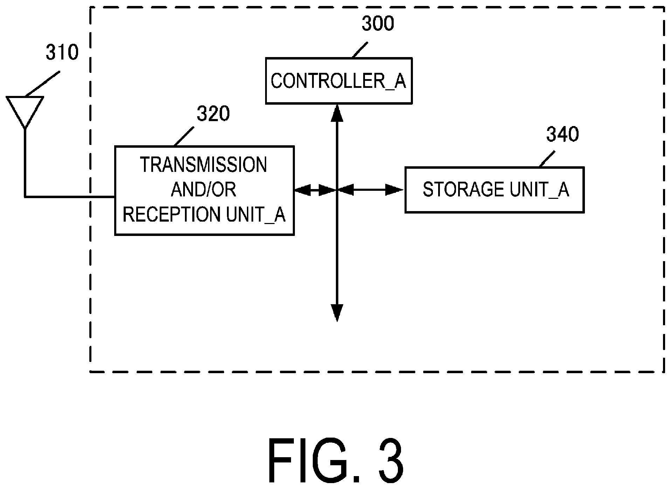

First, an apparatus configuration example of the user equipment (UE) will be described with reference to FIG. 3. The UE includes a controller_A 300, an antenna 310, a transmission and/or reception unit_A 320, and the storage unit_A 340. The controller A 300, the transmission and/or reception unit_A 320, and the storage unit_A 340 are connected via a bus. The transmission and/or reception unit_A 320 is connected to the antenna 310.

The controller_A 300 is a function unit that controls the overall operations and functions of the UE. The controller_A 300 reads and performs various programs stored in the storage unit_A 340 as necessary, and thereby implements various types of processing in the UE.

The transmission and/or reception unit_A 320 is a function unit that performs radio communication with the base station apparatus (the eNB or the gNB) in the access network via the antenna. In other words, the LTE can transmit and/or receive user data and/or control information to and/or from the access network apparatus, and/or the core network apparatus, and/or the PDN, and/or the DN by using the transmission and/or reception unit_A 320.

To give detailed description with reference to FIG. 2, the UE can communicate with the base station apparatus (eNB) in the E-UTRAN via an LTE-Uu interface by using the transmission and/or reception unit_A 320. In addition, the UE can communicate with the base station apparatus (gNB) in the 5G AN by using the transmission and/or reception unit_A 320. In addition, the LTE can transmit and/or receive a non-access-stratum (NAS) message to and/or from the AMF via the N1 interface by using the transmission and/or reception unit_A 320. However, the N1 interface is a logical interface, and thus communication between the UE and the AMF is actually performed via the 5G AN.

The storage unit_A 340 is a function unit that stores programs, user data, control information, and the like necessary for each operation of the UE.

### 2.2. Apparatus Configuration of gNB

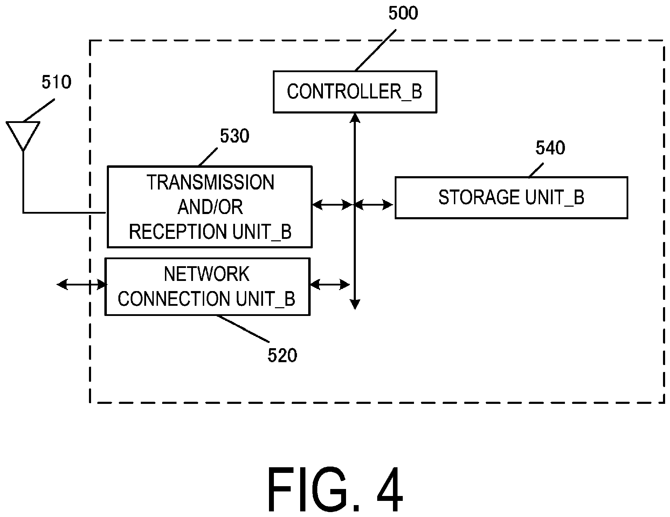

Next, an apparatus configuration example of the gNB will be described with reference to FIG. 4. The gNB includes a controller_B 500, an antenna 510, a network connection unit_B 520, a transmission and/or reception unit_B 530, and a storage unit_B 540. The controller_B 500, the network connection unit_B 520, the transmission and/or reception unit_B 530, and the storage unit_B 540 are connected via a bus. The transmission and/or reception unit_B 530 is connected to the antenna 510.

The controller_B 500 is a function unit that controls the overall operations and functions of the gNB. The controller_B 500 reads and performs various programs stored in the storage unit_B 540 as necessary, and thereby implements various types of processing in the gNB.

The network connection unit_B 520 is a function unit for the gNB to communicate with the AMF and/or the UPF. In other words, the gNB can transmit and/or receive user data and/or control information to and/or from the AMF and/or the UPF by using the network connection unit_B 520.

The transmission and/or reception unit_B 530 is a function unit that performs radio communication with the LTE via the antenna 510. In other words, the gNB can transmit and/or receive user data and/or control information to and/or from the LTE by using the transmission and/or reception unit_B 530.

To give detailed description with reference to FIG. 2, the gNB in the 5G AN can communicate with the AMF via the N2 interface and can communicate with the UPF via the N3 interface by using the network connection unit_B 520. In addition, the gNB can communicate with the LTE by using the transmission and/or reception unit_B 530.

The storage unit_B 540 is a function unit that stores programs, user data, control information, and the like necessary for each operation of the gNB.

### 2.3. Apparatus Configuration of AMF

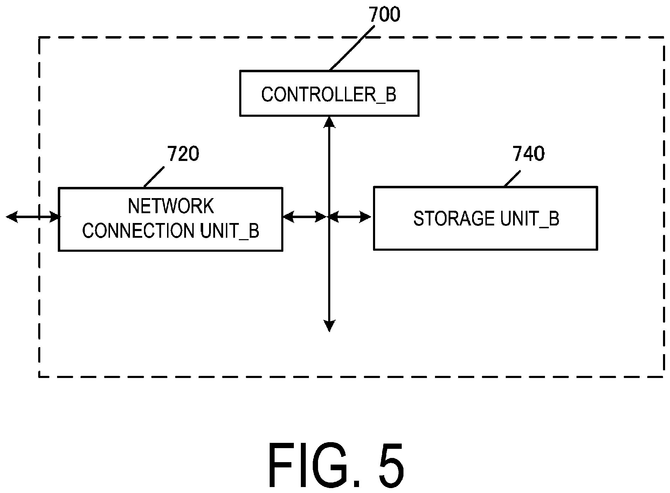

Next, an apparatus configuration example of the AMF will be described with reference to FIG. 5. The AMF includes a controller_B 700, a network connection unit_B 720, and a storage unit_B 740. The controller_B 700, the network connection unit_B 720, and the storage unit_B 740 are connected via a bus. The AMF may be a node that handles the control plane.

The controller B 700 is a function unit that controls the overall operations and functions of the AMF. The controller _B 700 reads and performs various programs stored in the storage unit_B 740 as necessary, and thereby implements various types of processing in the AMF.

The network connection unit_B 720 is a function unit for the AMF to connect to the base station apparatus (gNB), and/or the SMF, and/or the PCF, and/or the UDM, and/or the SCEF in the 5G AN. In other words, the AMF can transmit and/or receive user data and/or control information to and/or from the base station apparatus (gNB), and/or the SMF, and/or the PCF, and/or the UDM, and/or the SCEF in the 5G AN by using the network connection unit_B 720.

To give detailed description with reference to FIG. 2. the AMF in the 5GCN can communicate with the gNB via the N2 interface can communicate with the UDM via an N8 interface, can communicate with the SMF via an N11 interface, and can communicate with the PCF via the N15 interface by using the network connection unit_A 620. In addition, the AMF can transmit and/or receive a NAS message to and/or from the UE via the N1 interface by using the network connection unit_A 620. However, since the N1 interface is a logical interface, communication between the UE and the AMF is actually performed through the 5G AN. In addition, in a case that the AMF supports an N26 interface, the AMF can communicate with the MME via the N26 interface by using the network connection unit_A 620.

The storage unit_B 740 is a function unit that stores programs, user data, control information, and the like necessary for each operation of the AMF.

Further, the AMF has a function of exchanging a control message with the RAN using the N2 interface, a function of exchanging a NAS message with the UE using the N1 interface, a function of performing encryption and integrity protection of a NAS message, a registration management (RM) function, a connection management (CM) function, a reachability management function, a mobility management function for the UE or the like, a function of transferring a session management (SM) message between the UE and the SMF, an access authentication (access authorization) function, a security anchor function (security anchor functionality (SEA)), a security context management (SCM) function, a function of supporting the N2 interface for a non-3GPP interworking function (N3IWF), a function of supporting transmission and/or reception of a NAS signal with the UE via the N3IWF, a function of authenticating the UE connected via the N3IWF, and the like.

In addition, in registration management, an RM state for each piece of UE is managed. The RM state may be synchronized between the UE and the AMF. The RM state includes a deregistered state (RM-DEREGISTERED state) and a registered state (RM-REGISTERED state). In the RM-DEREGISTERED state, the LTE is not registered with the network, and thus the AMF becomes unable to reach the UE because a UE context of the AMF does not have valid location information or routing information about the UE. In addition, in the RM-REGISTERED state, the UE is registered with the network, and thus the UE can receive a service that requires registration with the network. Further, the RM state may be expressed as a 5GMM state. In this case, the RM-DEREGISTERED state may be expressed as a 5GMM-DEREGISTERED state, and the RM-REGISTERED state may be expressed as a 5GMM-REGISTERED state.

In other words, 5GMM-REGISTERED may be a state in which each apparatus has established a 5GMM context, or may be a state in which each apparatus has established a PDU session context. Further, in a case that each apparatus is 5GMM-REGISTERED, the UE_A 10 may start transmission and/or reception of user data or a control message, or may respond to paging. Furthermore, in a case that each apparatus is 5GMM-REGISTERED, the UE_A 10 may perform a registration procedure other than a registration procedure for initial registration, and/or a service request procedure.

Furthermore, 5GMM-DEREGISTERED may be a state in which each apparatus has not established the 5GMM context, may be a state in which the location information of the UE_A 10 is not known to the network, or may be a state in which the network is unable to reach the UE_A 10. Further, in a case that each apparatus is 5GMM-DEREGISTERED, the UE_A 10 may start the registration procedure, or may perform the registration procedure to thereby establish the 5GMM context.

In addition, in connection management, a CM state for each piece of UE is managed. The CM state may be synchronized between the UE and the AMF. The CM state includes a non-connected state (CM-IDLE state) and a connected state (CM-CONNECTED state). In the CM-IDLE state, although the UE is in the RM-REGISTERED state, the UE does not have a NAS signalling connection established with the AMF via the N1 interface. In addition, in the CM-IDLE state, the UE does not have a connection to the N2 interface (N2 connection) and a connection to the N3 interface (N3 connection). In contrast, in the CM-CONNECTED state, the UE has a NAS signalling connection established with the AMF via the N1 interface. In addition, in the CM-CONNECTED state, the UE may have a connection to the N2 interface (N2 connection) and/or a connection to the N3 interface (N3 connection).

Furthermore, in connection management, the CM state in 3GPP access and the CM state in non-3GPP access may be separately managed. In this case, the CM state in 3GPP access may include a non-connected state in 3GPP access (CM-IDLE state over 3GPP access) and a connected state in 3GPP access (CM-CONNECTED state over 3GPP access). Furthermore, the CM state in non-3GPP access may include a non-connected state in non-3GPP access (CM-IDLE state over non-3GPP access) and a connected state in non-3GPP access (CM-CONNECTED state over non-3GPP access). Further, the non-connected state may be expressed as an idle mode, and a connected state mode may be expressed as a connected mode.

Further, the CM state may be expressed as a 5GMM mode. In this case, the non-connected state may be expressed as a 5GMM non-connected mode (5GMM-IDLE mode), and the connected state may be expressed as a 5GMM connected mode (5GMM-CONNECTED mode). Furthermore, the non-connected state in 3GPP access may be expressed as a 5GMM non-connected mode in 3GPP access (5GMM-IDLE mode over 3GPP access), and the connected state in 3GPP access may be expressed as a 5GMM connected mode in 3GPP access (5GMM-CONNECTED mode over 3GPP access). Furthermore, the non-connected state in non-3GPP access may be expressed as a 5GMM non-connected mode in non-3GPP access (5GMM-IDLE mode over non-3GPP access), and the connected state in non-3GPP access may be expressed as a 5GMM connected mode in non-3GPP access (5GMM-CONNECTED mode over non-3GPP access). Further, the 5GMM non-connected mode may be expressed as an idle mode, and the 5GMM connected mode may be expressed as a connected mode.

In addition, one or more AMFs may be deployed in the core network_B. In addition, the AMF may be a network function (NF) that manages one or more network slice instances (NSIs). In addition, the AMF may be a common control plane (CP) function (common control plane network function (CPNF) or CCNF) shared among multiple NSIs.

Further, in a case that the UE connects to the 5GS over non-3GPP access, the N3IWF is an apparatus and/or a function deployed between non-3GPP access and the 5GCN.

### 2.4. Apparatus Configuration of SMF

Next, an apparatus configuration example of the SMF will be described with reference to FIG. 5. The SMF includes a controller B 700, a network connection unit_B 720, and a storage unit_B 740. The controller_B 700, the network connection unit_B 720, and the storage unit_B 740 are connected via a bus. The SMF may be a node that handles the control plane.

The controller B 700 is a function unit that controls the overall operations and functions of the SMF. The controller_B 700 reads and performs various programs stored in the storage unit_B 740 as necessary, and thereby implements various types of processing in the SMF.

The network connection unit_B 720 is a function unit for the SMF to connect to the AMF, and/or the UPF, and/or the PCF, and/or the UDM. In other words, the SMF can transmit and/or receive user data and/or control information to and/or from the AMF, and/or the UPF, and/or the PCF, and/or the UDM by using the network connection unit_B 720.

To give detailed description with reference to FIG. 2, the SMF in the 5GCN can communicate with the AMF via the N11 interface, can communicate with the UPF via an N4 interface, can communicate with the PCF via an N7 interface, and can communicate with the UDM via an N10 interface by using the network connection unit_A 620.

The storage unit_B 740 is a function unit that stores programs, user data, control information, and the like necessary for each operation of the SMF.

The SMF has a session management function such as establishment, modification, and release of a PDU session, a function of IP address allocation to the UE and management thereof, a function of selection and control of the UPF, a function of configuring the UPF for routing traffic to an appropriate destination (transmission destination), a function of transmitting and/or receiving an SM part of a NAS message, a function of issuing a notification about arrival of downlink data (downlink data notification), a function of providing SM information specific to the AN (for each AN) that is transmitted to the AN through the AMF via the N2 interface, a function of determining a session and service continuity mode (SSC mode) for a session, a roaming function, and the like.

### 2.5. Apparatus Configuration of UPF

Next, an apparatus configuration example of the UPF will be described with reference to FIG. 5. The UPF includes a controller B 700, a network connection unit_B 720, and a storage unit_B 740. The controller B 700, the network connection unit_B 720, and the storage unit_B 740 are connected via a bus. The UPF may be a node that handles the control plane.

The controller_B 700 is a function unit that controls the overall operations and functions of the UPF. The controller_B 700 reads and performs various programs stored in the storage unit_B 740 as necessary, and thereby implements various types of processing in the UPF.

The network connection unit_B 720 is a function unit for the UPF to connect to the base station apparatus (gNB), and/or the SMF, and/or the DN in the 5G AN. In other words, the UPF can transmit and/or receive user data and/or control information to and/or from the base station apparatus (gNB), and/or the SMF, and/or the DN in the 5G AN by using the network connection unit_B 720.

To give detailed description with reference to FIG. 2. the UPF in the 5GCN can communicate with the gNB via the N3 interface, can communicate with the SMF via the N4 interface, can communicate with the DN via an N6 interface, and can communicate with another UPF via an N9 interface by using the network connection unit_A 620.

The storage unit_B 740 is a function unit that stores programs, user data, control information, and the like necessary for each operation of the UPF.

The UPF has a function as an anchor point for intra-RAT mobility or inter-RAT mobility, a function as an external PDU session point to be mutually connected to the DN (that is, a function of transferring user data as a gateway between the DN and the core network_B), a function of routing and transferring packets, an uplink classifier (UL CL) function of supporting routing of multiple traffic flows for one DN, a branching point function of supporting a multi-homed PDU session, a quality of service (QoS) processing function for the user plane, a function of verifying uplink traffic, a function of triggering buffering of downlink packets and downlink data notification, and the like.

In addition, the UPF may be a gateway for IP communication and/or non-IP communication. In addition, the UPF may have a function of transferring IP communication, or a function of performing conversion between non-IP communication and IP communication. Furthermore, multiple deployed gateways may be gateways for connecting the core network_B to a single DN. Further, the UPF may have connectivity to another NF, and may be connected to each apparatus via another NF.

Further, the user plane may be of user data that is transmitted and/or received between the UE and a network. The user plane may be transmitted and/or received by using a PDN connection or a PDU session. Furthermore, in a case of the EPS, the user plane may be transmitted and/or received by using an LTE-Uu interface, and/or an S1-U interface, and/or an S5 interface, and/or an S8 interface, and/or an SGi interface. Furthermore, in a case of the 5GS, the user plane may be transmitted and/or received via the interface between the UE and the NG RAN, and/or the N3 interface, and/or the N9 interface, and/or the N6 interface. The user plane may be hereinafter referred to as a U-Plane.

Furthermore, the control plane may be of a control message that is transmitted and/or received in order to perform communication control of the UE or the like. The control plane may be transmitted and/or received by using a non-access-stratum (NAS) signalling connection between the LTE and the MME. Furthermore, in a case of the EPS, the control plane may be transmitted and/or received by using the LTE-Uu interface and the S 1-MME interface. Furthermore, in a case of the 5GS, the control plane may be transmitted and/or received by using the interface between the UE and the NG RAN and the N2 interface. The control plane may be hereinafter expressed as a control plane or a C-Plane.

Furthermore, the user plane (U-Plane or UP) may be a communication path for transmitting and/or receiving user data, and may include multiple bearers. Furthermore, the control plane (C-Plane or CP) may be a communication path for transmitting and/or receiving a control message, and may include multiple bearers.

### 2.6. Description of Other Apparatuses and/or Functions

Next, other apparatuses and/or functions will be described.

The PCF has a function of providing a policy rule, and the like.

In addition, the UDM has an authentication information processing (authentication credential processing) function, a user identification processing function, an access authentication function, a registration/mobility management function, a subscriber information management (subscription management) function, and the like.

In addition, the PCRF is connected to the PGW and/or the PDN, and has a function of performing QoS management for data delivery, and the like. For example, the PCRF manages the QoS of a communication path between the UE_A 10 and the PDN. Furthermore, the PCRF may be an apparatus that creates and/or manages a policy and charging control (PCC) rule and/or a routing rule used by each apparatus transmitting and/or receiving user data.

In addition, the HSS is connected to the MME and/or the SCEF, and has a function of managing subscriber information and the like. The subscriber information of the HSS is referred to in a case of, for example, access control of the MME. Furthermore, the HSS may be connected to a location management apparatus that is different from the MME.

### 3. Description of Terms and Identification Information Used in Each Embodiment

Next, terms and identification information used in each embodiment will be described.

### 3.1. Description of Terms Used in Each Embodiment

Next, highly technical terms and identification information used in procedures that are used in each embodiment will be described.

A network refers to at least some of the access network_B, the core network_B, and the DN. In addition, one or more apparatuses included in at least some of the access network_B, the core network_B, and the DN may be referred to as a network or a network apparatus. In other words, "a network transmits and/or receives a message and/or performs processing" may mean "an apparatus (a network apparatus and/or a control apparatus) in a network transmits and/or receives a message and/or performs processing". Conversely, "an apparatus in a network transmits and/or receives a message and/or performs processing" may mean "a network transmits and/or receives a message and/or performs processing".

A session management (SM) message (also referred to as a non-access-stratum (NAS) SM message) may be a NAS message used in a procedure for SM, or may be a control message transmitted and/or received between the UE_A 10 and the SMF _A 230 via the AMF_A 240. Furthermore, the SM message may include a PDU session establishment request message, a PDU session establishment accept message, a PDU session establishment reject message, a PDU session modification request message, a PDU session modification command message, a PDU session modification complete message, a PDU session modification command reject message, a PDU session modification reject message, a PDU session release request message, a PDU session release reject message, a PDU session release command message, a PDU session release complete message, and the like. In addition, the procedure for SM or the SM procedure may include a PDU session establishment procedure, a PDU session modification procedure, and a PDU session release procedure (UE-requested PDU session release procedure). Further, each procedure may be a procedure started by the UE, or may be a procedure started by the NW.

A mobility management (MM) message (or also referred to as a NAS MM message) may be a NAS message used in a procedure for MM, or may be a control message transmitted and/or received between the UE_A 10 and the AMF_A 240. Furthermore, the MM message may include a registration request message, a registration accept message, a registration reject message, a de-registration request message, a de-registration accept message, a configuration update command message, a configuration update complete message, a service request message, a service accept message, a service reject message, a notification message, a notification response message, and the like. In addition, the procedure for MM or the MM procedure may include a registration procedure, a de-registration procedure, a generic UE configuration update procedure (also referred to simply as a UE configuration update procedure), an authentication and/or authorization procedure, a service request procedure, a paging procedure, and a notification procedure.

A 5G system (5GS) service may be a connection service provided by using the core network_B 190. Furthermore, the 5GS service may be a service different from an EPS service, or may be a service similar to the EPS service.

A non-5GS service may be a service other than the 5GS service and may include an EPS service and/or a non-EPS service.

A packet data network (PDN) type indicates a type of a PDN connection and includes IPv4, IPv6, IPv4v6, and non-IP. In a case that IPv4 is specified, it indicates that transmission and/or reception of data is performed by using IPv4. In a case that IPv6 is specified, it indicates that transmission and/or reception of data is performed by using IPv6. In a case that IPv4v6 is specified, it indicates that transmission and/or reception of data is performed by using IPv4 or IPv6. In a case that non-IP is specified, it indicates that communication is performed using a communication method other than the IP, rather than performing communication by using the IP.

Although a protocol data unit/packet data unit (PDU) session can be defined as a relationship between the DN that provides a PDU connectivity service and the UE, the PDU session may be connectivity established between the UE and an external gateway. In the 5GS, the LTE establishes a PDU session via the access network B and the core network_B, and can thereby perform transmission and/or reception of user data to and/or from the DN by using the PDU session. Here, the external gateway may be a UPF, an SCEF, or the like. The UE can perform transmission and/or reception of user data to and/or from an apparatus deployed in the DN, such as an application server, by using a PDU session. Further, each apparatus (the UE, and/or the access network apparatus, and/or the core network apparatus) may associate one or more pieces of identification information with PDU session(s) for management. Further, these pieces of identification information may include one or more of a DNN, a QoS rule, a PDU session type, application identification information, NSI identification information, access network identification information, and an SSC mode, and may further include other pieces of information. Furthermore, in a case that multiple PDU sessions are established, pieces of identification information associated with the PDU sessions may have the same or different content.

A data network name (DNN) may be identification information for identifying the core network and/or an external network such as the DN. Furthermore, the DNN can also be used as information for selecting a gateway such as the PGW/LTPF connecting the core network_B 190. Furthermore, the DNN may correspond to an access point name (APN).

A protocol data unit/packet data unit (PDU) session type indicates a type of PDU session and includes IPv4, IPv6, Ethernet, and Unstructured. In a case that IPv4 is specified, it indicates that transmission and/or reception of data is performed by using IPv4. In a case that IPv6 is specified, it indicates that transmission and/or reception of data is performed by using IPv6. In a case that Ethernet is specified, it indicates that transmission and/or reception of an Ethernet frame is performed. In addition, Ethernet may indicate that communication by using the IP is not performed. In a case that unstructured is specified, it indicates that data is transmitted and/or received to and/or from an application server in the DN or the like by using a point-to-point (P2P) tunneling technique. For the P2P tunneling technique, for example, a UDP/IP encapsulation technique may be used. Further, the PDU session types may include the IP, in addition to the above types. The IP can be specified in a case that the UE can use both IPv4 and IPv6.

A public land mobile network (PLMN) is a communication network that provides mobile radio communication services. The PLMN is a network managed by an operator who is a network operator, and the operator can be identified by a PLMN ID. A PLMN that matches a mobile network code (MNC) and a mobile country code (MCC) of an international mobile subscriber identity (IMSI) of the UE may be a home PLMN (HPLMN). Furthermore, the UE may hold an equivalent HPLMN list for identifying one or multiple equivalent HPLMNs (EHPLMNs) in the USIM. A PLMN different from the HPLMN and/or the EPLMN may be a visited PLMN (VPLMN). A PLMN with which the UE has successfully registered may be a registered PLMN (RPLMN).

A tracking area is a single or multiple ranges that can be expressed with location information of the UE_A 10 managed by the core network. Further, the tracking area may include multiple cells. Furthermore, the tracking area may be a range in which a control message of paging, or the like is broadcast, or may be a range in which the UE_A 10 can move without performing a handover procedure. Furthermore, the tracking area may be a routing area, or a location area, or an area that is similar to these. A tracking area may be hereinafter referred to as a tracking area (TA). A tracking area may be identified by a tracking area identity (TAI) constituted by a tracking area code (TAC) and the PLMN.

A registration area is a set of one or multiple TAs allocated to the UE by the AMF. Further, while moving within one or multiple TAs included in a registration area, the UE_A 10 may be able to move without transmitting and/or receiving a signal for updating the tracking area. In other words, a registration area may be an information group indicating areas in which the UE_A 10 can move without performing a tracking area update procedure. The registration area may be identified by a TAI list constituted by one or multiple TAIs.

The current TAI is a TAI broadcasted by a selected PLMN in a cell in which the UE is present or camps. In addition, in a case that a corresponding cell is a satellite NG-RAN cell in which multiple TACs are broadcast on a selected PLMN, a UE NAS layer may select the current TAI from multiple tracking area codes (TACs) in the selected PLMN.

Lists of 5GS forbidden tracking areas may be a list of 5GS forbidden tracking areas for roaming and/or a list of 5GS forbidden tracking areas for regional provision of service stored in UE that does not operate in an SNPN access operation mode. In other words, the UE that does not operate in the SNPN access operation mode must store the list of 5GS forbidden tracking areas for roaming and/or the list of 5GS forbidden tracking areas for regional provision of service. Furthermore, the LTE needs to search for a suitable cell belonging to a TA not included in the list of 5GS forbidden tracking areas within the same PLMN.

Further, in a case that the LTE is present in a cell of a TA that belongs to the list of 5GS forbidden tracking areas for regional provision of service, the UE is not allowed to request 5GS services other than emergency services.

In addition, the LTE may also store a forbidden tracking area ID (TAI) in the list of 5GS forbidden tracking areas for regional provision of service in order to prevent repeated access attempts to cells in the forbidden tracking areas. Furthermore, the list of 5GS forbidden tracking areas for regional provision of service may be deleted when the LTE is powered off, when the SIM card is removed, or periodically (in a period in the range of 12 to 24 hours).

In addition, information indicating the 5GS forbidden tracking areas for roaming may be transmitted to the LTE by being included in an information element (IE) including one or multiple forbidden TAIs (also referred to as forbidden TAIs) for the list of 5GS forbidden tracking areas for roaming (forbidden TAI(s) for the list of "5GS forbidden tracking areas for roaming" IE), the information element included in a message transmitted by the network.

In addition, the information indicating the 5GS forbidden tracking areas for regional provision of service may be included and transmitted to the UE in an information element (IE) including one or multiple forbidden TAIs for the list of 5GS forbidden tracking areas for regional provision of service (forbidden TAI(s) for the list of "5GS forbidden tracking areas for regional provision of service" IE), the information element included in a message transmitted by the network.

A non-terrestrial network (NTN) is an NG-RAN including multiple gNBs, and may provide non-terrestrial NR access to the UE by an NTN payload and an NTN gateway mounted on an NTN transmission means such as a satellite or a flying object installed in the outer space or in the air.

Here, the NTN payload is a network node that is mounted on a satellite or a high-altitude platform station and provides a connection function between a service link and a feeder link. Furthermore, the NTN payload may be a transport network layer (TNL) node.

In addition, an NTN gateway is an earth station installed on the earth's surface and provides a connection to the NTN Payload by using a feeder link. Furthermore, the NTN gateway may be a transport network layer (TNL) node.

In other words, for example, an NR satellite access by LTE may be an NR connection via a gNB composed of a satellite carrying an NTN payload (also referred to simply as a satellite in the present specification) and an NTN gateway. Furthermore, the LTE may perform procedures for registration with the network and/or establishment of a PDU session via the NR connection, and may further perform communication by using the established PDU session after the procedures are completed.

Furthermore, radio access technology (RAT) types in NR satellite access may include, for example, NR (LEO), NR (MEO), NR (GEO), and NR (OTHERSAT). Here, each of the RAT types is a RAT type for connection of NR (LEO) via a low earth orbit (LEO) satellite, NR (MEO) via a middle earth orbit (MEO) satellite, NR (GEO) via a geostationary earth orbit (GEO) satellite, or NR (OTHERSAT) via other satellites. In other words, in a case that the UE accesses either of NR (LEO), NR (MEO), NR (GEO), or NR (OTHERSAT) as the RAT type, it may be NR satellite access.

In the present specification, an NR connection via a satellite is also referred to herein as NR satellite access, connection or access via a satellite, or simply satellite access.

A UE ID is information for identifying the UE. For example, the UE ID may be a subscription concealed identifier (SUCI), or a subscription permanent identifier (SUPI), or a globally unique temporary identifier (GUTI), or an international mobile subscriber identity (IMEI), or an IMEI software version (IMEISV), or a temporary mobile subscriber identity (TMSI), for example. Alternatively, the UE ID may be other information configured by an application or within the network. Moreover, the UE ID may be information for identifying the user.

### 3.2. Description of Identification Information Used in Each Embodiment

First identification information in the present invention may be one or multiple forbidden TAI(s) for the list of "5GS forbidden tracking areas for roaming" information element (IE). In other words, the first identification information may be information elements included in a message transmitted from the network to the UE to indicate one or multiple forbidden TAIs included in the list of 5GS forbidden tracking areas for roaming.

Second identification information in the present invention may be one or multiple forbidden TAI(s) for the list of "5GS forbidden tracking areas for regional provision of service" information element (IE). In other words, the second identification information may be information elements included in a message transmitted from the network to the LTE to indicate one or multiple forbidden TAIs included in the list of 5GS forbidden tracking areas for regional provision of service.

Here, the first and/or second identification information may be information provided when the UE camps on the NG-RAN cell. In other words, the first and/or second identification information may be information provided to the UE connecting to the 5GC over NR satellite access. More specifically, the first and/or second identification information may be an information element that is included only in a case that a message is transmitted over the satellite NG-RAN access.

### 4. Description of Procedures Used in Each Embodiment

Next, procedures used in each embodiment will be described. Further, the procedures used in each embodiment include a registration procedure, and a UE configuration update procedure (generic UE configuration update procedure). Each procedure will be described below.

Further, in each embodiment, a case where each of the combinations including the HSS and the UDM, the PCF and the PCRF, the SMF and the PGW-C, and the UPF and the PGW-U is configured to form a single apparatus (that is, the same physical hardware, or the same logical hardware, or the same software) as illustrated in FIG. 2 will be described as an example. However, the contents described in the present embodiment can also be applied to a case where each of the combinations is configured to form different apparatuses (that is, different pieces of physical hardware, or different pieces of logical hardware, or different pieces of software). For example, data may be directly transmitted and/or received between these apparatuses, data may be transmitted and/or received via the N26 interface between the AMF and the MME, or data may be transmitted and/or received via the UE.

### 4.1. Registration Procedure

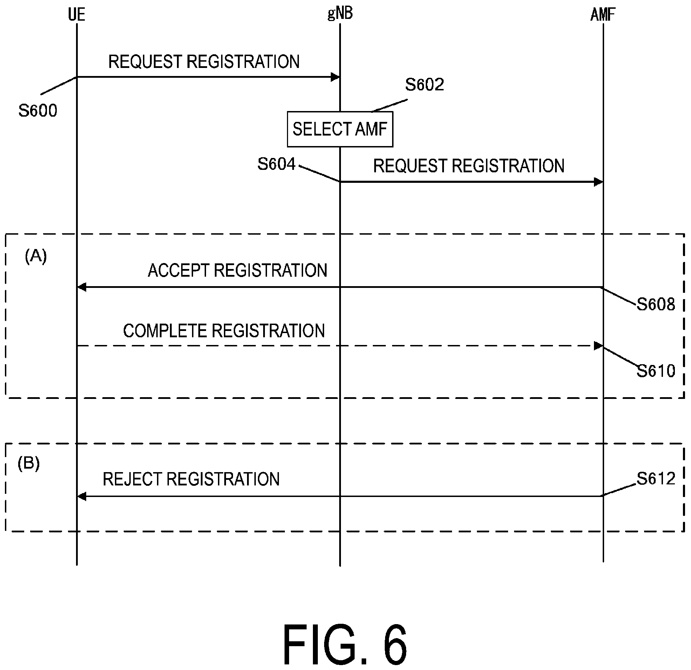

First, the registration procedure will be described with reference to FIG. 6. The registration procedure is a procedure in the 5GS. Hereinafter, the present procedure indicates the registration procedure. The registration procedure is a procedure for registration with the access network_B, and/or the core network_B, and/or the DN initiated by the UE. In a case that the UE is not registered with the network, for example, the UE can perform the present procedure at any timing such as at the time of power input. In other words, the UE can start the present procedure at any timing in the deregistered state (RM-DEREGISTERED state). In addition, each apparatus (in particular, the UE and the AMF) can transition to the registered state (RM-REGISTERED state) based on completion of the registration procedure.

In addition, the registration procedure may be initial registration started by the UE. In addition, the registration procedure may be of mobility and periodic registration. In addition, the registration procedure may be an MM procedure.

In addition, the registration procedure may be a procedure for updating location registration information of the UE with the network, and/or periodically giving a notification of the state of the UE from the UE to the network, and/or updating a specific parameter related to the LTE for the network.

In addition, the present procedure may be a procedure for registration by the UE over NR satellite access. In addition, a PDU session established after completion of the present procedure may be a PDU session via the satellite NG-RAN.

In a case that the LTE has mobility across TAs, the LTE may start the registration procedure. In other words, when the UE moves to a TA that is different from the TA indicated on the stored TA list, the UE may start the registration procedure. Furthermore, the UE may start the present procedure when the running timer expires. Furthermore, the UE may start the registration procedure when a context of each apparatus needs to be updated due to discontinuation or invalidation of the PDU session. In addition, in a case that there is a change in capability information and/or a preference related to establishment of a PDU session by the LTE, the LTE may start the registration procedure. Furthermore, the LTE may periodically start the registration procedure. Furthermore, the LTE may start the registration procedure based on completion of the UE configuration update procedure. Further, the UE can perform the registration procedure at any timing, without being limited to the above conditions.

Furthermore, the UE may periodically start the registration procedure even in the registered state. In other words, the UE may start the registration procedure based on the expiration of the timer.

Further, the registration procedure performed based on the mobility of the UE and the registration procedure performed periodically may be expressed as a registration procedure for mobility and registration update. In other words, the registration procedure for mobility and registration update may be a registration procedure performed based on the mobility of the UE, or may be a registration procedure performed periodically. Furthermore, the registration procedure for mobility and registration update may be a registration procedure performed based on configuration update of the UE. Furthermore, the registration procedure for mobility and registration update may be a registration procedure performed to establish a communication path for transmitting and/or receiving user data. Furthermore, the registration procedure for mobility and registration update may be a registration procedure performed based on a request from the network. Furthermore, in other words, the registration procedure for mobility and registration update may be a registration procedure other than the initial registration procedure. Hereinafter, the registration procedure for mobility and registration update may be expressed as the present procedure.

Next, each step of the registration procedure will be described. Further, the registration procedure described below may be a registration procedure for initial registration, or may be a registration procedure for mobility and registration update.

First, the UE starts the registration procedure by transmitting a registration request message to the AMF (S600), (S602), and (S604). Specifically, the UE transmits an RRC message including the registration request message to the 5G AN (or the gNB) (S600). Further, the registration request message is a NAS message. In addition, the RRC message may be a control message transmitted and/or received between the UE and the 5G AN (or the gNB). In addition, the NAS message is processed in the NAS layer, and the RRC message is processed in the RRC layer. Further, the NAS layer is a layer higher than the RRC layer.

In addition, by including an SM message in the registration request message to be transmitted, or by transmitting an SM message together with the registration request message, the UE may start the PDU session establishment procedure in the registration procedure. Here, the SM message may be a PDU session establishment request message.

When the 5G AN (or the gNB) receives the RRC message including the registration request message, the 5G AN (or the gNB) selects the AMF to transfer the registration request message (S602). Further, the 5G AN (or the gNB) can select the AMF based on the information included in the registration request message and/or the RRC message. The 5G AN (or the gNB) extracts the registration request message from the received RRC message and transfers the registration request message to the selected AMF (S604).

In a case that the AMF has received the registration request message, the AMF can perform first condition judgment. The first condition judgment is to judge whether the network (or the AMF) accepts the request from the UE. In a case that the first condition judgment is true, the AMF starts the procedure of (A) of FIG. 6, and in a case that the first condition judgment is false, the AMF starts the procedure of (B) of FIG. 6.

Further, the first condition judgment may be performed based on the reception of the registration request message, and/or each piece of identification information included in the registration request message, and/or subscriber information, and/or network capability information, and/or operator policy, and/or network state, and/or user registration information, and/or context stored in the AMF, and/or the like. For example, the first condition judgment may be true in a case that the network allows the request from the LTE, and the first condition judgment may be false in a case that the network does not allow the request from the UE. In addition, in a case that a network with which the LTE is to be registered and/or an apparatus in the network supports the function requested by the UE, the first condition judgment may be true, whereas in a case that the network and/or the apparatus does not support the function requested by the UE, the first condition judgment may be false. Furthermore, in a case that the transmitted and/or received identification information is allowed, the first condition judgment may be true, whereas in a case that the transmitted and/or received identification information is not allowed, the first condition judgment may be false. Further, conditions to determine whether the first condition judgment is true or false may not be limited to the conditions described above.

First, the case where the first condition judgment is true will be described. In the procedure of (A) of FIG. 6, first, the AMF can perform fourth condition judgment. The fourth condition judgment is to judge whether the AMF performs transmission and/or reception of an SM message to and/or from the SMF.

Further, the fourth condition judgment may be performed based on whether the AMF has received an SM message. In addition, the fourth condition judgment may be performed based on whether the registration request message includes an SM message. For example, in a case that the AMF has received an SM message, and/or a case that the registration request message includes an SM message, the fourth condition judgment may be true, whereas in a case that the AMF has received no SM message, and/or a case that the registration request message includes no SM message, the fourth condition judgment may be false. Further, conditions to determine whether the fourth condition judgment is true or false may not be limited to the conditions described above.

Next, the AMF transmits a registration accept message to the LTE via the 5G AN (or the gNB) as a response message to the registration request message based on reception of the registration request message, and/or completion of transmission and/or reception of an SM message to and/or from the SMF (S608). For example, in a case that the fourth condition judgment is false, the AMF may transmit the registration accept message based on reception of the registration request message from the UE. In addition, in a case that the fourth condition judgment is true, the AMF may transmit the registration accept message based on completion of transmission and/or reception of an SM message to and/or from the SMF. Further, although the registration accept message is a NAS message transmitted and/or received on the N1 interface, the message is included and transmitted and/or received in the RRC message between the UE and the 5G AN (gNB).

The AMF may include at least one or more pieces of identification information of the first to second identification information in the registration accept message for transmission. In addition, the AMF may also transmit the identification information so that the AMF indicates one or more forbidden TAIs to the UE. In addition, in a case that multiple pieces of identification information are transmitted and/or received, two or more pieces of identification information of these pieces of identification information may be configured as one or more pieces of identification information. Further, information indicating support for each function and information indicating a request for use of each function may be transmitted and/or received as the same piece of identification information, or may be transmitted and/or received as different pieces of identification information.

Further, the AMF may select and determine whether one or more pieces of identification information of the first and second identification information is to be included in the registration accept message, based on each piece of the identification information received by the AMF, and/or subscriber information, and/or network capability information, and/or operator policy, and/or network state, and/or user registration information, and/or context stored in the AMF, and/or the like.

Here, the network may indicate the content of the identification information to the UE by transmitting the registration accept message.

In addition, the AMF can include an SM message in the registration accept message for transmission, or transmit an SM message together with the registration accept message. However, this transmission method may be performed in a case that the SM message is included in the registration request message and the fourth condition judgment is true. In addition, this transmission method may be performed in a case that the SM message is included together with the registration request message and the fourth condition judgment is true. By performing such a transmission method as described above, the AMF can indicate that a procedure for SM has been accepted in the registration procedure. Here, the SM message may be a PDU session establishment request message, or a PDU session establishment accept message.

In addition, by transmitting the registration accept message based on each piece of the received identification information, and/or subscriber information, and/or network capability information, and/or operator policy, and/or network state, and/or user registration information, and/or context stored in the AMF, and/or the like, the AMF may indicate that the request from the UE has been accepted.

Furthermore, the AMF may include information indicating that a part of the request from the LTE has been rejected in the registration accept message for transmission, or may transmit information indicating that a part of the request from the LTE has been rejected so as to indicate the reason for the rejection of the part of the request from the UE. Furthermore, by receiving the information indicating that the part of the request from the UE has been rejected, the UE may recognize the reason for the rejection of the part of the request from the UE. Further, the reason for the rejection may be information indicating that contents indicated by the identification information received by the AMF are not allowed.

The UE receives the registration accept message from the AMF via the 5G AN (gNB) (S608). By receiving the registration accept message, the UE can recognize that the request from the UE on the registration request message has been accepted, and recognize the contents of various pieces of the identification information included in the registration accept message.

Here, the UE that has received the registration accept message may update the TAI list stored in the LTE based on the received first identification information and/or second identification information. A method of updating the first identification information and/or the second identification information based on reception of the first identification information and/or the second identification information by the UE may be the same as the UE configuration update procedure described below. That is, in a case that the UE does not store one or more forbidden TAIs included in the received first and/or second identification information, the LTE may store the one or more forbidden TAIs included in the first and/or second identification information. Alternatively, in a case that the UE stores the one or more forbidden TAIs included in the received first and/or second identification information, the UE may delete the one or more forbidden TAIs included in the first and/or second identification information from the TAI list stored in the UE.

The UE can further transmit to the AMF a registration complete message as a response message with respect to the registration accept message via the 5G AN (gNB) (S610). Here, although the registration complete message is a NAS message transmitted and/or received via the N1 interface, the registration complete message is included and transmitted and/or received in the RRC message between the UE and the 5G AN (gNB).

The AMF receives the registration complete message via the 5G AN (gNB) (S610). In addition, each apparatus completes the procedure of (A) of FIG. 6 based on transmission and/or reception of the registration accept message and/or the registration complete message.

Next, a case where the first condition judgment is false will be described. In the procedure of (B) of FIG. 6, the AMF transmits a registration reject message to the UE via the 5G AN (gNB) as a response message to the registration request message (S612). Here, although the registration reject message is a NAS message transmitted and/or received via the N1 interface, the registration reject message is included and transmitted and/or received in the RRC message between the UE and the 5G AN (gNB).

Here, the AMF may include one or more pieces of identification information of the first and second identification information in the registration reject message for transmission. In addition, the AMF may also transmit the identification information so that the AMF indicates one or more forbidden TAIs to the UE. In addition, in a case that multiple pieces of identification information are transmitted and/or received, two or more pieces of identification information of these pieces of identification information may be configured as one or more pieces of identification information. Further, information indicating support for each function and information indicating a request for use of each function may be transmitted and/or received as the same identification information, or may be transmitted and/or received as different pieces of identification information.

Further, the AMF may select and determine whether one or more pieces of identification information of the first and second identification information is to be included in the registration reject message based on each piece of the identification information received by the AMF, and/or subscriber information, and/or network capability information, and/or operator policy, and/or network state, and/or user registration information, and/or context stored in the AMF, and/or the like.

Furthermore, the AMF may indicate that the request from the UE using the registration request message has been rejected by transmitting the registration reject message. Furthermore, the AMF may transmit information indicating the reason for rejection in the registration reject message, or may indicate the reason for rejection by transmitting the reason for rejection. Moreover, by receiving the information indicating the reason for rejection of the request from the UE, the UE may recognize the reason for rejection of the request from the UE. Further, the reason for the rejection may be information indicating that contents indicated by the identification information received by the AMF are not allowed.

The UE receives the registration reject message from the AMF via the 5G AN (gNB) (S612). The UE can recognize that the request from the UE based on the registration request message has been rejected and recognize the content of various kinds of identification information included in the registration reject message by receiving the registration reject message. In addition, in a case that the UE receives no registration reject message even after a predetermined time period has elapsed after transmitting the registration request message, the UE may recognize that the request from the UE has been rejected. Each apparatus completes the procedure of (B) in the present procedure based on the transmission and/or reception of the registration reject message.

Here, the UE that has received the registration reject message may update the TAI list stored in the LTE based on the received first identification information and/or second identification information. A method of updating the first identification information and/or the second identification information based on reception of the first identification information and/or the second identification information by the UE may be the same as the procedure at the time of reception of the registration accept message or the UE configuration update procedure to be described below. That is, in a case that the UE does not store one or more forbidden TAIs included in the received first and/or second identification information, the UE may store the one or more forbidden TAIs included in the first and/or second identification information. Alternatively, in a case that the UE has already stored one or more forbidden TAIs included in the received first and/or second identification information, the UE may delete the one or more forbidden TAIs included in the first and/or second identification information from the TAI list stored in the UE.

Further, the procedure of (B) of FIG. 6 may be started in a case that the procedure of (A) of FIG. 6 is discontinued.

Each apparatus completes the registration procedure based on completion of the procedure of (A) or (B) of FIG. 6. Further, each apparatus may transition to a state (RM_REGISTERED state) in which the UE is registered with the network based on completion of the procedure of (A) of FIG. 6, may maintain a state (RM_DEREGISTERED state) in which the UE is not registered with the network or may transition to a state in which the LTE is not registered with the network based on completion of the procedure of (B) of FIG. 6. In addition, the transition of each apparatus to each state may be performed based on completion of the registration procedure, or may be performed based on establishment of a PDU session.

In addition, the LTE may complete the registration procedure based on the reception of the registration accept message or the registration reject message.

Furthermore, each apparatus may perform processing performed by using the information transmitted and/or received in the registration procedure based on completion of the registration procedure. For example, in a case that information indicating that a part of the request from the LTE has been rejected is transmitted and/or received, the reason for rejection of the request from the UE may be recognized. Furthermore, each apparatus may perform the present procedure again or may perform the registration procedure on the core network_B or another cell based on the reason for rejection of the request from the UE.

Moreover, the UE may store the identification information received along with the registration accept message and/or the registration reject message or may recognize determination of a network based on the completion of the registration procedure.

The UE may recognize the contents of the identification information by receiving the registration accept message or the registration reject message.

Further, a behavior to be performed in a case that each piece of identification information is received may be performed based on the received identification information.

### 4.2. UE Configuration Update Procedure

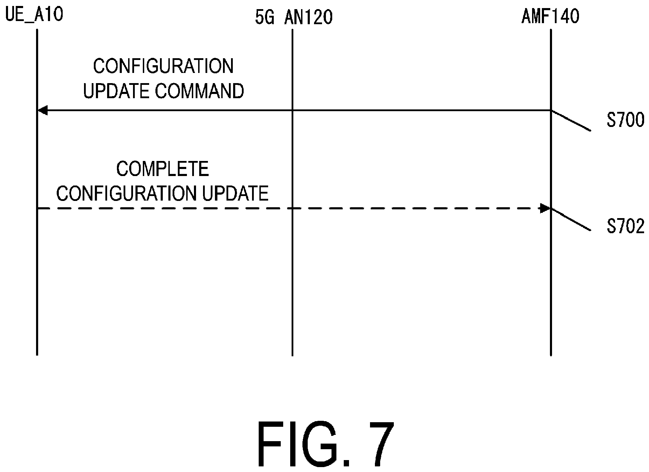

Next, the UE configuration update procedure (generic UE configuration update procedure) will be described with reference to FIG. 7. The UE configuration update procedure is hereinafter also referred to as the present procedure. The present procedure is a procedure initiated by a core network to update configuration information of the UE. Furthermore, the present procedure may be a procedure for mobility management that is initiated and performed by the network with respect to the UE registered with the network. In addition, the present procedure may be a procedure performed after completion of the registration procedure described in Section 4.1.

Furthermore, the apparatus in the core network, such as the AMF, may start the present procedure based on update of the configuration of the network and/or update of the operator policy. Further, the present procedure may be triggered by detection of mobility of the UE, detection of a state change of the UE, and/or the access network, and/or the core network, or a state change of the network slice. Furthermore, the present procedure may be triggered by reception of a request from the DN and/or an application server of the DN, a change in the configuration of the network, or a change in the operator policy. Furthermore, the present procedure may be triggered by expiration of the running timer. Further, a trigger for the apparatus in the core network to start the present procedure is not limited to these. In other words, the present procedure may be performed at any timing after the above-described registration procedure and/or PDU session establishment procedure is completed. Furthermore, the present procedure may be performed at any timing in a state in which each apparatus has established a 5GMM context and/or in a state in which each apparatus is in the 5GMM connected mode. Furthermore, the present procedure may be a procedure performed in a case that the UE is in the 5GMM connected mode and in the registered state. Further, the UE in the present procedure may be UE that has completed registration and/or establishment of a PDU session over NR satellite access.

In addition, each apparatus may transmit and/or receive a message including identification information for changing configuration information of the LTE and/or identification information for discontinuing or changing the function being performed by the LTE in the present procedure. Furthermore, each apparatus may update the configuration information to a configuration indicated by the network, or may start a behavior indicated by the network based on completion of the present procedure.

The UE may update the configuration information of the LTE based on control information transmitted and/or received in the present procedure. Furthermore, the UE may discontinue the function being performed, or may start a new function, along with the update of the configuration information of the UE. In other words, the apparatus in the core network may initiate the present procedure and further transmit a control message and control information of the present procedure to the UE so as to cause the UE to update the configuration information of the UE that can be identified by using these pieces of control information. Furthermore, by causing the UE to update the configuration information of the UE, the apparatus in the core network may cause the UE to discontinue the function being performed by the UE or to start a new function.

First, the AMF 140 transmits a configuration update command message to the UE_A 10 via the 5G AN 120 (or the gNB) (S700) to start the UE configuration update procedure.

The AMF 140 may include the first identification information and/or the second identification information in the configuration update command message for transmission. Here, the first identification information and/or the second identification information included in the configuration update command message may be a new value for updating the stored first identification information and/or second identification information received by the UE from the AMF in the registration accept message in the registration procedure described in Section 4.1. Furthermore, even in a case that the AMF 140 has received no registration request message including the first identification information from the UE in the registration procedure described in Section 4.1, the AMF may transmit the first identification information and/or the second identification information in the present procedure.

In addition, the AMF 140 may select and determine whether to include the first identification information and/or the second identification information in the configuration update command message based on each piece of received identification information, and/or the subscriber information, and/or network capability information, and/or operator policy, and/or network state, and/or user registration information, and/or context stored in the AMF 140, and/or the necessity to update the configuration of the UE, and/or the like.

In addition, the AMF 140 may indicate a request for update of the configuration information of the UE_A 10 by transmitting the configuration update command message based on each piece of received identification information, and/or the subscriber information, and/or network capability information, and/or operator policy, and/or network state, and/or user registration information, and/or context stored in the AMF 140, and/or the like.

In a case that the UE has received the configuration update command message including the first identification information and/or the second identification information, the UE may update the TAI list stored in the UE based on the received first identification information and/or second identification information. A method of updating the first identification information and/or the second identification information based on reception of the first identification information and/or the second identification information by the UE may be the same as the registration procedure.

That is, in a case that the UE has received the configuration update command message including the first identification information and/or the second identification information, and that the UE has not stored one or more forbidden TAIs included in the received first identification information and/or second identification information, the UE may store the one or more forbidden TAIs included in the first identification information and/or second identification information in a list of corresponding 5GS forbidden tracking areas. In addition, in a case that the UE has received the configuration update command message including the first identification information and/or the second identification information, and that the UE has already stored one or more forbidden TAIs included in the received first identification information and/or second identification information, the UE may delete the one or more forbidden TAIs included in the first identification information and/or second identification information from the TAI list stored in the UE.

More specifically, in a case that the UE has received the configuration update command message including the first identification information, and that the LTE has not stored one or more forbidden TAIs included in the received first identification information, the LTE may store the one or more forbidden TAIs included in the first identification information in the list of 5GS forbidden tracking areas for roaming. In addition, in a case that the UE has received the configuration update command message including the first identification information, and that the UE has already stored one or more forbidden TAIs included in the received first identification information, the UE may delete the one or more forbidden TAIs included in the first identification information from the TAI list stored in the UE.

In addition, in a case that the LTE has received the configuration update command message including the second identification information, and that the UE has not stored one or more forbidden TAIs included in the received second identification information, the UE may store the one or more forbidden TAIs included in the second identification information in the list of 5GS forbidden tracking areas for regional provision of service. In addition, in a case that the LTE has received the configuration update command message including the second identification information, and that the UE has already stored one or more forbidden TAIs included in the received second identification information, the UE may delete the one or more forbidden TAIs included in the second identification information from the TAI list stored in the UE.

Furthermore, the UE may transmit a configuration update complete message to the AMF 140 via the 5G AN (gNB) as a response message to the configuration update command message, based on the identification information included in the configuration update command message (S702).

In a case that the UE_A 10 transmits a configuration update complete command message, the AMF 140 receives a configuration update complete message via the 5G AN (gNB) (S702). In addition, each apparatus completes the present procedure based on transmission and/or reception of the configuration update command message and/or the configuration update complete message.

Furthermore, each apparatus may perform processing based on information transmitted and/or received in the present procedure based on completion of the present procedure. For example, in a case that update information for configuration information is transmitted and/or received, each apparatus may update the configuration information. Furthermore, in a case that information indicating that the registration procedure needs to be performed is transmitted and/or received, the UE_A 10 may start the registration procedure based on completion of the present procedure.

Furthermore, the UE_A 10 may store the first identification information and/or second identification information received together with the configuration information command message, or may recognize determination of the network based on completion of the present procedure. In addition, the LTE may perform each procedure based on the stored information based on the completion of the present procedure.

In the above-described procedure, by transmitting and/or receiving the configuration update command message, the apparatuses in the core network can indicate to the UE to update the configuration information already stored or applied by the UE and indicate to the UE to discontinue or change the function performed by the UE.

As described above, as the network transmits the UE update command message including the first and/or second identification information to the UE through the UE configuration update procedure initiated by the network, the list of forbidden TAIs stored in the LTE can be updated while the LTE in the 5GMM connected mode maintains the registration state through the procedure initiated by the network.

### 5. Modified Examples

A program running on an apparatus according to an aspect of the present invention may serve as a program that controls a central processing unit (CPU) and the like to cause a computer to function in such a manner as to realize the functions of the embodiment according to the aspect of the present invention. Programs or information handled by the programs are temporarily stored in a volatile memory such as a random access memory (RAM), a non-volatile memory such as a flash memory, a hard disk drive (HDD), or another storage device system.

Further, a program for realizing the functions of the embodiment according to an aspect of the present invention may be recorded in a computer-readable recording medium. The functions may be realized by causing a computer system to read the program recorded on the recording medium for performance. It is assumed that the "computer system" refers to a computer system built into the apparatuses, and the computer system includes an operating system and hardware such as a peripheral device. Furthermore, the "computer-readable recording medium" may be any of a semiconductor recording medium, an optical recording medium, a magnetic recording medium, a medium dynamically retaining the program for a short time, or any other computer readable recording medium.

In addition, each functional block or various features of the apparatuses used in the aforementioned embodiment may be implemented or performed on an electric circuit, for example, an integrated circuit or multiple integrated circuits. An electric circuit designed to perform the functions described in the present specification may include a general purpose processor, a digital signal processor (DSP), an application specific integrated circuit (ASIC), a field programmable gate array (FPGA), or other programmable logic devices, discrete gates or transistor logic, discrete hardware components, or a combination thereof. The general-purpose processor may be a microprocessor, or may be a processor of a known type, a controller, a micro-controller, or a state machine. The aforementioned electric circuit may include a digital circuit or may include an analog circuit. In addition, in a case that a circuit integration technology that replaces the present integrated circuits appears with advances in semiconductor technology, it is possible for one or multiple aspects of the present invention to use a new integrated circuit based on the technology.

Further, the invention of the present application is not limited to the above-described embodiments. In the embodiment, although the apparatuses have been described as an example, the invention of the present application is not limited to these apparatuses, and is applicable to a terminal apparatus or a communication apparatus of fixed-type or stationary-type electronic equipment installed indoors or outdoors, for example, AV equipment, kitchen equipment, a cleaning or washing machine, an air-conditioner, office equipment, a vending machine, and other household apparatuses.

Although, the embodiments of the present invention have been described in detail above referring to the drawings, the specific configuration is not limited to the embodiments and includes, for example, design changes within the scope that does not depart from the gist of the present invention. In addition, various modifications are possible within the scope of claims of the present invention, and embodiments that are made by suitably combining technical means disclosed according to the different embodiments are also included in the technical scope of the present invention. Furthermore, a configuration in which elements described in the respective embodiments and having mutually the same effects are substituted for one another is also included.

### Reference Signs List

1 Mobile communication system
10 UE_A
30 PGW-U
32 PGW-C
35 SGW
40 MME
45 eNB
50 HSS
60 PCRF
80 Access network_A (E-UTRAN)
90 Core network_A
120 Access network_B (5G AN)
122 gNB
130 UPF
132 SMF
140 AMF
150 UDM
160 PCF
190 Core network_B
235 UPF_A
239 UPF_C

## Claims

1. A user equipment, UE, comprising:
a transmission and/or reception unit;
a controller; and
a storage unit, wherein
in a UE configuration update procedure, the transmission and/or reception unit receives a configuration update command message including first identification information and/or second identification information,
the first identification information is a forbidden TAI for a list of 5G system, 5GS, forbidden tracking areas for roaming information element and includes one or more tracking area identities, TAIs, and
the second identification information is a forbidden TAI for a list of 5GS forbidden tracking areas for regional provision of service information element and includes one or more TAIs, and
the controller
stores, in a case that the storage unit does not store one or more TAIs included in the first and/or second identification information, the one or more TAIs included in the first and/or second identification information, and
deletes, in a case that the storage unit stores one or more TAIs included in the first and/or second identification information, the one or more TAIs included in the first and/or second identification information.
